# FASCICULE DE BREVET EUROPEEN

(11) **EP 2 831 382 B1**
(45) Date de publication et mention de la délivrance du brevet: **25.05.2016**
(21) Numéro de dépôt: 13719935.2
(22) Date de dépôt: 28.03.2013
(51) Int. Cl.: F01D 25/16, F01D 25/24, F02C 7/20, F02K 1/04

(54) **ENSEMBLE D'ARRIÈRE-CORPS DE MOTEUR AÉRONAUTIQUE, MOTEUR AÉRONAUTIQUE ET AÉRONEF ASSOCIÉS**
BAUEINHEIT FÜR DAS HINTERTEIL EINES FLUGZEUGTRIEBWERKS, ZUGEHÖRIGES FLUGZEUGTRIEBWERK UND FLUGZEUG
AFTERBODY ASSEMBLY OF AN AIRCRAFT ENGINE, CORRESPONDING AIRCRAFT ENGINE AND AIRCRAFT

(30) Priorité: 29.03.2012 FR 1252848
(43) Date de publication de la demande: 04.02.2015
(73) Titulaire: HERAKLES, 33185 Le Haillan (FR)
(72) Inventeur: MECUSON, Gautier, F-33200 Bordeaux (FR); CONETE, Eric, F-33700 Merignac (FR); CARRERE, Benoît, F-33320 Le Taillan Medoc (FR); PHILIPPE, Eric, F-33700 Merignac (FR)
(74) Mandataire: Desormiere, Pierre-Louis
(86) Numéro de dépôt international: PCT/FR2013/050669
(87) Numéro de publication internationale: WO 2013/144512

(56) Documents cités:
- US-A1- 2011 203 255

## Description

### Arrière-plan de l'invention

La présente invention se rapporte à la fixation des pièces en matériau composite utilisées dans les arrière-corps de moteurs aéronautiques tels que les turboréacteurs.

Afin de réduire la masse des arrière-corps, il est connu de réaliser une ou plusieurs pièces de l'arrière-corps, telles que le cône d'échappement et/ou la tuyère primaire en matériau composite plutôt qu'en matériau métallique. Ces pièces présentent un faible coefficient de dilatation thermique par rapport au carter d'échappement métallique du moteur sur lesquels elles doivent être montées. Afin de compenser les dilatations différentielles entre ces éléments, les pièces en matériau composite sont montées sur le carter en matériau métallique au moyen de pattes de fixation élastiquement souples généralement réalisées en matériau métallique réfractaire.

La figure 5 illustre un arrière-corps de turboréacteur décrit dans le document US 2011/203255. L'arrière-corps comprend une tuyère d'éjection ou tuyère primaire 10 et un corps central ou cône d'échappement 20 (encore appelé "plug"). La tuyère primaire 10 et le cône d'échappement 20 sont en matériau composite CMC qui de façon bien connue, sont formées par un renfort fibreux en fibres réfractaires (carbone ou céramique) qui est densifié par une matrice céramique, notamment carbure, nitrure, oxyde réfractaire.

La tuyère primaire 10 est fixée sur un premier anneau de fixation métallique 40 appartenant ou destiné à être fixé au carter d'échappement moteur (non représenté) au moyen de pattes de fixation élastiquement souples 50. Le cône d'échappement 20 est quant à lui fixé sur un deuxième anneau de fixation métallique 60 faisant également partie du carter d'échappement au moyen de pattes de fixation élastiquement déformables 70. Les pattes de fixation sont réalisées en un matériau métallique réfractaire tel que notamment de l'Inconel®, de l'Hastelloy® ou du Waspalloy®. En fonction de la taille et de la masse de la pièce en CMC, les pattes de fixation sont dimensionnées pour assurer une tenue mécanique vis-à-vis des charges normales et limites qui correspond au maintien d'un jeu radial et axial entre la pièce en CMC et la pièce métallique afin de permettre la compensation des dilatations différentielles et l'amortissement des vibrations.

Cependant, ce type de fixation de pièces en matériau composite sur des pièces en matériau métallique présente certains inconvénients. Tout d'abord, les pattes de fixation en matériau métallique représentent une partie significative, à savoir environ 30%, de la masse globale de la pièce. L'utilisation de ce type de pattes de fixation complexifie en outre la gestion de l'étanchéité avec le carter. Enfin, le coût de fabrication de ces pattes de fixation est relativement élevé.

### Objet et résumé de l'invention

La présente invention a pour but de proposer une nouvelle conception pour intégrer des pièces axisymétriques d'arrière-corps en matériau composite, telles qu'un cône d'échappement ou une tuyère primaire, au carter d'échappement qui permet de s'affranchir de l'utilisation de pattes de fixation élastiques en matériau métallique.

A cet effet, l'invention propose un ensemble d'arrière-corps de moteur aéronautique comprenant un carter d'échappement en matériau métallique comprenant une pluralité de bras s'étendant radialement entre une virole interne et une virole externe, ledit ensemble comprenant en outre au moins une pièce axisymétrique en matériau composite s'étendant entre une extrémité amont fixée au carter d'échappement et une extrémité aval libre,
caractérisé en ce que ladite pièce axisymétrique comporte à son extrémité amont une portion annulaire comportant une pluralité de fentes délimitant entre elles une pluralité de pattes de fixation élastiques, chaque fente coopérant avec un bras du carter d'échappement, le carter d'échappement comprenant en outre des portions de fixation auxquelles sont attachées les pattes de fixation élastiques.

Grâce à la conception de l'ensemble d'arrière-corps de l'invention, l'utilisation de pattes de fixation élastiques en matériau métallique n'est plus nécessaire pour accommoder les dilatations thermiques différentielles entre chaque pièce axisymétrique en matériau composite et le carter d'échappement métallique. En effet, car chaque pièce axisymétrique est munie de fentes qui délimitent des pattes de fixation souples directement intégrées à la pièce et qui permettent de compenser les dilatations thermiques différentielles avec le carter d'échappement. Ainsi, chaque pièce axisymétrique peut être directement attachée sur le carter d'échappement, ce qui permet, en outre d'un gain de masse, de simplifier le montage de l'ensemble d'arrière-corps et d'en réduire le coût.

Selon un premier aspect de l'invention, l'ensemble d'arrière corps comprend un cône d'échappement en matériau composite fixé sur les bras du carter d'échappement à une position intermédiaire entre la virole interne et la virole externe dudit carter, lesdits bras comprenant chacun une portion de fixation au niveau de ladite position intermédiaire à laquelle est attachée une patte de fixation élastique de la portion annulaire située à l'extrémité amont du cône d'échappement.

Selon un deuxième aspect de l'invention, l'ensemble d'arrière corps comprend une tuyère d'échappement en matériau composite fixée sur les bras du carter d'échappement à une position voisine de la virole externe dudit carter, ladite virole externe comprenant des portions de fixation auxquelles sont attachées les pattes de fixation élastiques de la portion annulaire située à l'extrémité amont de la tuyère d'échappement.

Selon un troisième aspect de l'invention, chaque fente comporte une première partie s'étendant à partir de l'extrémité amont de chaque pièce axisymétrique et présentant des dimensions correspondant à la partie du bras avec laquelle ladite fente coopère. Chaque fente peut en outre comporter une seconde partie s'étendant en aval de la première partie afin d'augmenter la souplesse des pattes de fixation élastiques.

Selon un quatrième aspect de l'invention, chaque pièce axisymétrique est réalisée en matériau composite comprenant un renfort fibreux en fibres réfractaires densifié par une matrice au moins partiellement céramique. Dans ce cas, la matrice est une matrice céramique choisie parmi au moins : un oxyde, un nitrure, un carbure et un siliciure. Chaque pièce axisymétrique peut être notamment réalisée en matériau composite comprenant un renfort fibreux en fibres de carbure de silicium densifié par une matrice en carbure de silicium comportant une ou plusieurs phases auto-cicatrisantes.

L'invention concerne également un moteur aéronautique comprenant un ensemble d'arrière-corps selon l'invention et un aéronef comprenant au moins un tel moteur aéronautique.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique en perspective éclatée d'un arrière-corps de turboréacteur conformément à un mode de réalisation de l'invention;
- la figure 2 est vue schématique en perspective de l'arrière-corps de la figure 1 partiellement monté ;
- la figure 3 est une vue schématique en perspective de l'arrière-corps de la figure 1 entièrement monté ;
- la figure 4 est une vue schématique en perspective du carter de l'arrière-corps de la figure 1 ;

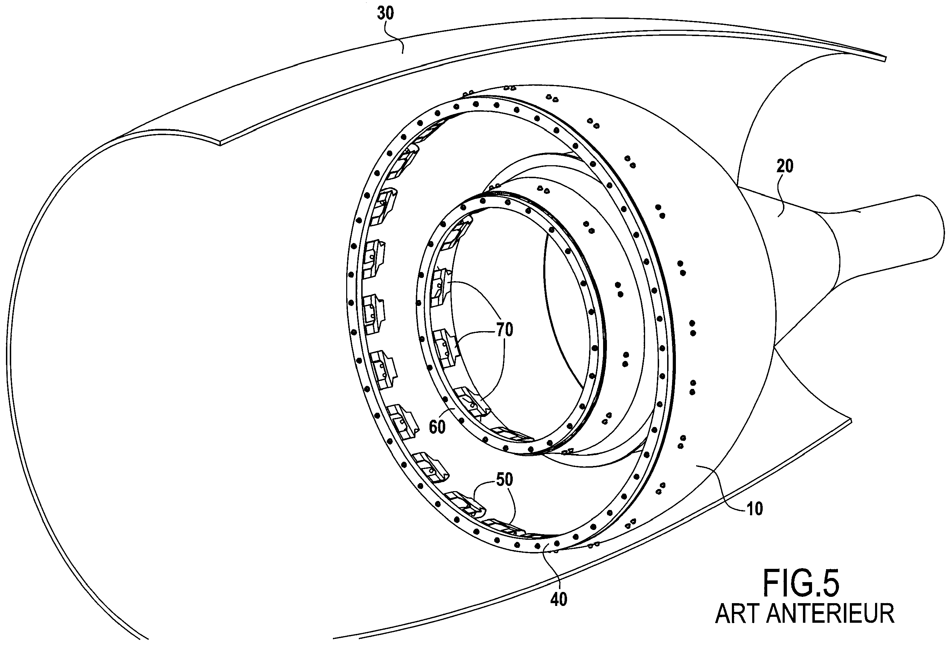

- la figure 5 est une vue schématique en perspective d'un arrière-corps de turboréacteur selon l'art antérieur.

### Description détaillée d'un mode de réalisation

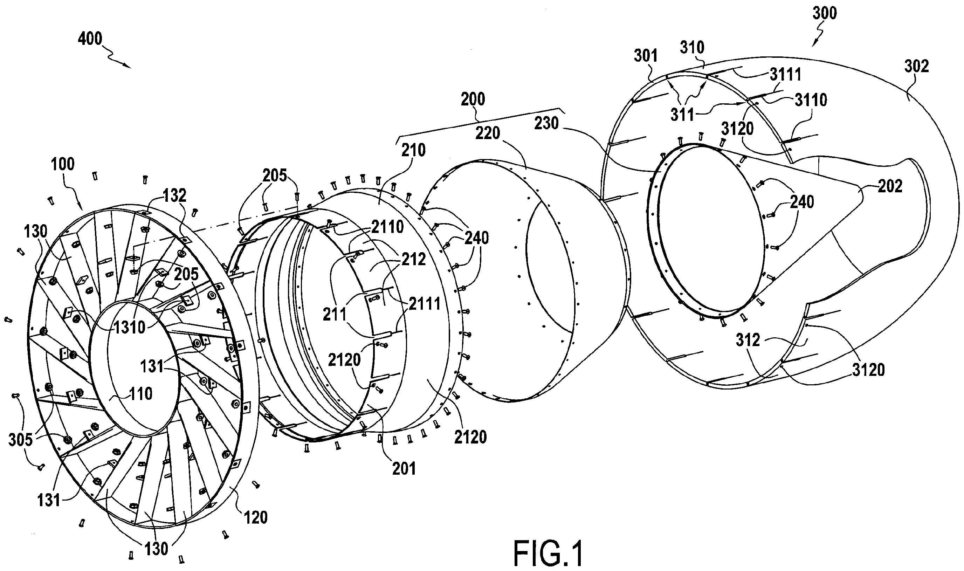

Les figures 1 à 3 illustrent un ensemble d'arrière-corps 400 de turboréacteur constituant le système d'échappement de ce dernier. L'arrière-corps comprend un carter d'échappement 100 et deux pièces axisymétriques correspondant à un corps central ou cône d'échappement 200 (encore appelé "plug") et à une tuyère d'éjection ou tuyère primaire 300.

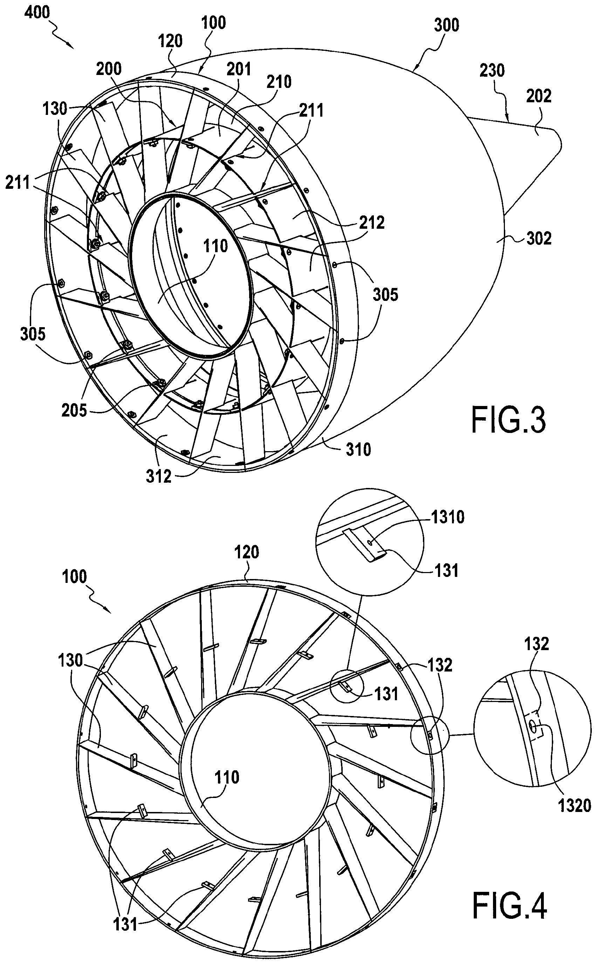

Le carter d'échappement 100 est réalisé en matériau métallique, par exemple en Inconel® 718, et comprend une virole interne 110 et une virole externe 120 entre lesquelles s'étendent des bras 130. Comme illustré sur la figure 4, chaque bras 130 comprend une portion de fixation 131 située à une position intermédiaire entre la virole interne 110 et la virole externe 120 et destinée à permettre la fixation du cône d'échappement 200 sur le carter d'échappement 100. Dans l'exemple décrit ici, la virole externe 120 comprend en outre une série de portions de fixation 132 situées à proximité de l'extrémité externe des bras 130.

Le cône d'échappement 200 s'étend d'amont en aval entre une extrémité amont 201 et une extrémité aval libre 202. Le cône comprend au niveau de son extrémité amont 201 une portion annulaire 210 dans laquelle sont ménagées des fentes 211 débouchant à l'extrémité amont 201. Les fentes 211 sont réparties autour de la portion annulaire 210 à des positions coïncidant avec celles des bras 130 du carter d'échappement au niveau des portions de fixation 131. Les fentes 211 délimitent des pattes de fixation élastiques 212 dans la portion annulaire 210.

Chaque fente 211 comprend une première partie 2110 présentant une longueur et une largeur adaptées pour recevoir la partie correspondante d'un bras 130 (figure 1). Dans l'exemple décrit ici, les fentes 211 comprennent en outre une seconde partie 2111 s'étendant en aval de la première partie 2110. Cette seconde partie 2111 permet d'augmenter la souplesse des pattes de fixation élastiques 212. Toutefois, selon les besoins de souplesse, les fentes des pattes de fixation peuvent ne comporter que la première partie destinée à recevoir les bras du carter d'échappement.

La fixation du cône d'échappement 200 sur le carter d'échappement 100 est assurée par des organes de fixation 205 de type vis/écrou disposés et serrés dans des trous 2120 et 1310 ménagés respectivement dans les pattes de fixation élastiques 212 et les premières portions de fixation 131 (figures 1 et 4). D'autres types de fixation, comme un brasage ou un collage, peuvent être utilisés pour fixer le cône d'échappement au carter d'échappement.

La tuyère primaire 300 s'étend d'amont en aval entre une extrémité amont 301 et une extrémité aval libre 302. La tuyère est munie à son extrémité amont 301 d'une portion annulaire 310 dans laquelle sont ménagées des fentes 311 débouchant à l'extrémité amont 201. Les fentes 311 sont réparties autour de la portion annulaire 310 à des positions coïncidant avec celles des bras 130 du carter d'échappement au niveau des portions de fixation 132, c'est-à-dire à proximité de la virole externe 120 du carter d'échappement 100. Les fentes 311 délimitent des pattes de fixation élastiques 312 dans la portion annulaire 310.

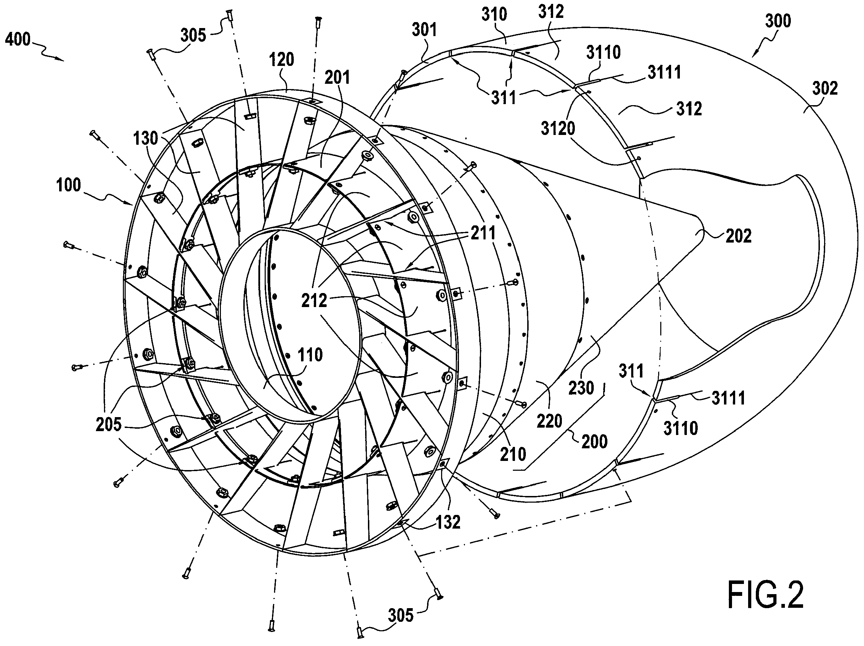

Chaque fente 311 comprend une première partie 3110 présentant une longueur et une largeur adaptées pour recevoir la partie correspondante d'un bras 130. Dans l'exemple décrit ici, les fentes 311 comprennent en outre une seconde partie 3111 s'étendant en aval de la première partie 3110 (figures 1 et 2). Cette seconde partie 3111 permet d'augmenter la souplesse des pattes de fixation élastiques 312. Toutefois, les fentes des pattes de fixation peuvent ne comporter que la première partie destinée à recevoir les bras du carter d'échappement lorsque la souplesse conférée par cette première partie est suffisante.

La fixation de la tuyère primaire sur le carter d'échappement 100 est assurée par des organes de fixation 305 de type vis/écrou disposés et serrés dans des trous 3120 et 1320 ménagés respectivement dans les pattes de fixation élastiques 312 et les portions de fixation 132 présentes sur la virole externe 120 du carter 100 (figures 1 et 4). D'autres types de fixation, comme un brasage ou un collage, peuvent être utilisés pour fixer le cône d'échappement au carter d'échappement.

Conformément à l'invention, le cône d'échappement 200 et la tuyère primaire 300 sont réalisés en matériau composite thermostructural, c'est-à-dire en un matériau apte à former des pièces de structure qui présentent de bonnes caractéristiques mécaniques et qui sont aptes à les conserver à température élevée.

Dans l'exemple décrit ici, le cône d'échappement 200 est constitué de trois parties réalisées en matériau composite thermostructural, à savoir la portion annulaire 210, une virole intermédiaire tronconique 220 et un cône d'extrémité 230, reliées entre elles au moyen de rivets 240. Toutefois, le cône d'échappement selon l'invention peut être réalisé avec un nombre de pièces différent. Le cône peut être notamment réalisée en une seule pièce présentant la forme générale du cône d'échappement 200 décrit précédemment.

La tuyère primaire 300 décrite ici est réalisée en une seule pièce mais peut être également réalisée en plusieurs éléments assemblés les uns avec les autres.

Les pièces constitutives du cône d'échappement 200 et de la tuyère primaire 300 sont réalisées notamment en matériau composite carbone/carbone (C/C) qui, de façon connue, est un matériau formé d'un renfort en fibres de carbone densifié par une matrice en carbone ou en matériau composite CMC qui, de façon connue, est un matériau formé d'un renfort en fibres de carbone ou céramique densifié par une matrice au moins partiellement céramique. Les matériaux composites thermostructuraux, comme le matériau C/C ou CMC, sont caractérisés par leurs propriétés mécaniques élevées qui les rendent aptes à constituer des pièces de structure et par leur capacité à conserver ces propriétés mécaniques à des températures élevées pouvant aller au-delà de 1300°C dans le cas du matériau C/C ou CMC. Les pièces constitutives du cône d'échappement 200 et de la tuyère primaire 300 sont de préférence réalisées en matériau CMC, tel que le matériau Cerasep® A40C qui est formé d'un renfort en fibres de carbure de silicium (SiC) et d'une matrice céramique, par exemple SiC, auto-cicatrisante.

La fabrication de pièces en matériau composite, notamment C/C ou CMC, est bien connue. Elle comprend généralement la réalisation d'une préforme fibreuse et la densification de cette préforme par la matrice en fibres réfractaires. La préforme fibreuse ayant une forme voisine de celle de la pièce à fabriquer est réalisée en fibres réfractaires, c'est-à-dire des fibres en céramique, par exemple en carbure de silicium (SiC), des fibres en carbone ou même encore des fibres en un oxyde réfractaire, par exemple en alumine (Al₂O₃).

La préforme fibreuse constitue le renfort de la pièce dont le rôle est essentiel vis-à-vis des propriétés mécaniques. La préforme est obtenue à partir de textures fibreuses en fibres réfractaires. Les textures fibreuses utilisées peuvent être de diverses natures et formes telles que notamment:
- tissu bidimensionnel (2D),
- tissu tridimensionnel (3D) obtenu par tissage 3D ou multicouches tel que notamment décrit dans le document WO 2010/061140 et dont le contenu est incorporé ici par référence,
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

On peut aussi utiliser une structure fibreuse formée de plusieurs couches superposées de tissu, tresse, tricot, feutre, nappes, câbles ou autres, lesquelles couches sont liées entre elles par exemple par couture, par implantation de fils ou d'éléments rigides ou par aiguilletage.

La mise en forme est réalisée par bobinage filamentaire, enroulage de nappe UD sur un mandrin, tissage, empilage, aiguilletage de strates bidimensionnelles/tridimensionnelles ou de nappes de câbles, etc.

Avant sa densification, la préforme fibreuse peut être consolidée afin de lui conférer une certaine tenue mécanique lui permettant de conserver sa mise en forme lors des manipulations.

Dans le cas d'un matériau C/C, la densification de la préforme fibreuse peut être réalisée par voie liquide en imprégnant cette dernière avec une résine précurseur de la matrice carbone telle qu'une résine de type phénolique.

Après imprégnation, la préforme fibreuse destinée à constituer le renfort fibreux de la pièce à réaliser, et ayant une forme correspondant sensiblement à celle de cette pièce, est mise en forme par conformation à l'aide d'un outillage de maintien. La ou les résines sont ensuite transformées (polymérisation/carbonisation) par traitement thermique. Les opérations d'imprégnation et de polymérisation/carbonisation peuvent être répétés plusieurs fois si nécessaire pour obtenir des caractéristiques mécaniques déterminées.

La densification de la préforme fibreuse peut-être également réalisée, de façon connue, par voie gazeuse par infiltration chimique en phase vapeur de la matrice carbone (CVI).

Une densification combinant voie liquide et voie gazeuse est parfois utilisée pour faciliter la mise en oeuvre, limiter les coûts et les cycles de fabrication tout obtenant des caractéristiques satisfaisantes pour l'utilisation envisagée.

Les matériaux CMC qui peuvent être utilisés pour réaliser les pièces axisymétriques de l'ensemble d'arrière-corps de l'invention sont formés par un renfort fibreux en fibres de carbone ou céramique qui est densifié par une matrice au moins partiellement céramique, notamment carbure, nitrure, oxyde réfractaire, etc., comme par exemple :
- un matériau composite carbone/carbone-carbure de silicium (C/C-SiC) qui est un matériau formé d'un renfort en fibres de carbone et densifié par une matrice comprenant une phase carbone et une phase carbure de silicium,
- un matériau composite carbone/carbure de silicium (C/SiC) qui est un matériau formé d'un renfort en fibres de carbone densifié par une matrice en carbure de silicium,
- un matériau composite carbure de silicium-carbure de silicium (SiC/SiC) qui est un matériau formé d'un renfort en fibres de carbure de silicium densifié par une matrice en carbure de silicium.
Dans le cas du matériau C-C/SiC, la première phase carbone de la matrice est déposée en premier afin d'être présente au plus près des fibres et recouverte ensuite par la deuxième phase SiC, ce qui permet de former sur la première phase carbone une couche de protection contre l'oxydation en SiC.

Dans le cas d'une densification par voie liquide, on utilise pour la matrice (ou phase céramique de celle-ci) une résine précurseur de céramique qui peut être par exemple une résine polycarbosilane précurseur de carbure de silicium (SiC), ou une résine polysiloxane précurseur de SiCO, ou une résine polyborocarbosilazane précurseur de SiCNB, ou une résine polysilazane (SiCN). Dans le cas d'un matériau C-C/SiC, la préforme fibreuse est d'abord imprégnée avec une résine précurseur de la phase carbone de la matrice telle qu'une résine de type phénolique.

Dans le cas d'une densification par voie gazeuse par infiltration chimique en phase vapeur de la matrice (CVI), on utilise pour la matrice (ou phase céramique de celle-ci) un précurseur gazeux de SiC qui peut être, par exemple, lors de la réalisation d'un matériau C-SiC, du méthyltrichlorosilane (MTS) donnant du SiC par décomposition du MTS. Lors de la réalisation d'un matériau C-C/SiC, la première phase carbone peut être formée avec des gaz hydrocarbures tels que méthane et/ou propane donnant le carbone par craquage, la deuxième phase SiC étant ensuite déposée sur la première phase carbone, par exemple par décomposition du MTS.

Les densification voie liquide et voix gazeuse peuvent être bien entendu combinées entre elles.

Dans l'exemple décrit ici, la portion annulaire 210, la virole intermédiaire tronconique 220, le cône d'extrémité 230 et la tuyère primaire 300 sont réalisés individuellement en matériau composite CMC de type Cerasep® A40C. Pour chacune de ces pièces, on réalise tout d'abord une texture fibreuse en fibres de SiC. Une fois constituée, la texture fibreuse est mise en forme et consolidée par imprégnation de cette dernière avec une composition liquide contenant une résine de consolidation précurseur de céramique.

A cet effet, la texture fibreuse est immergée dans un bain contenant la résine et habituellement un solvant de celle-ci. Après égouttage, un séchage est réalisé en étuve. Le séchage peut être accompagné d'une pré-réticulation ou réticulation partielle de la résine. Une telle pré-réticulation apportant une raideur supplémentaire, elle doit, si elle est réalisée, rester limitée pour préserver une déformabilité suffisante de la texture fibreuse.

D'autres techniques connues d'imprégnation peuvent être utilisées telles que préparation d'un pré-imprégné par passage de la texture fibreuse dans une imprégnatrice en continu, imprégnation par infusion, ou encore imprégnation par RTM ("Resin Transfer Moulding").

La résine de consolidation est choisie pour laisser, après pyrolyse, un résidu céramique suffisant pour assurer la consolidation de la préforme fibreuse réalisée ensuite.

Une résine précurseur de céramique peut être par exemple une résine polycarbosilane précurseur de carbure de silicium (SiC), ou une résine polysiloxane précurseur de SiCO, ou une résine polyborocarbosilazane précurseur de SiCNB, ou une résine polysilazane (SiCN).

Après imprégnation, une préforme fibreuse destinée à constituer le renfort fibreux de la pièce à réaliser, et ayant une forme correspondant sensiblement à celle de cette pièce, est mise en forme par conformation de la texture fibreuse à l'aide d'un outillage de maintien.

La mise en forme de la préforme fibreuse est de préférence accompagnée d'un compactage de la structure fibreuse afin d'augmenter le taux volumique de fibres dans le matériau composite de la pièce à réaliser.

Après mise en forme de la préforme, la réticulation de la résine est réalisée, ou achevée s'il y a eu pré-réticulation, la préforme étant dans un outillage.

Ensuite, la consolidation est achevée par un traitement thermique de pyrolyse de la résine. La pyrolyse est réalisée à une température par exemple d'environ 900°C à 1000°C.

La consolidation peut être également réalisée par infiltration chimique en phase gazeuse (CVI).

Après cette consolidation, la densification de la préforme fibreuse par une matrice céramique est poursuivie.

La densification est avantageusement réalisée par infiltration chimique en phase gazeuse (CVI), les paramètres du processus CVI et la nature de la phase gazeuse réactionnelle étant adaptés à la nature de la matrice à former. On peut ainsi enchaîner dans le même four les opérations de pyrolyse de la résine de consolidation et de densification.

La matrice céramique formée par CVI est une matrice SiC au moins en partie auto-cicatrisante, telle qu'une matrice silicium-bore-carbone (Si-B-C) ou une matrice carbure de bore (B₄C) ou encore une matrice séquencée avec des phases de matrices alternées en céramique non cicatrisante et en céramique cicatrisante. On pourra se référer notamment aux documents FR 2 401 888, US 5 246 736, US 5 965 266, US 6 068 930 et US 6 291 058.

La matrice céramique peut être déposée en plusieurs cycles d'infiltration successifs avec entre chaque cycle une opération d'usinage permettant de rouvrir la porosité du matériau en surface et de faciliter le dépôt de la matrice dans le renfort fibreux.

On obtient alors comme illustré sur la figure 1, deux pièces axisymétriques, à savoir le cône d'échappement 200 formé par l'assemblage de la portion annulaire 210, de la virole intermédiaire tronconique 220 et du cône d'extrémité 230 et la tuyère primaire 300.

## Revendications

1. Ensemble d'arrière-corps (400) de moteur aéronautique comprenant un carter d'échappement (100) en matériau métallique comprenant une pluralité de bras (130) s'étendant radialement entre une virole interne (110) et une virole externe (120), ledit ensemble comprenant en outre au moins une pièce axisymétrique (200 ; 300) en matériau composite s'étendant entre une extrémité amont (201 ; 301) fixée audit carter d'échappement (100) et une extrémité aval libre (202 ; 302),
**caractérisé en ce que** ladite pièce axisymétrique comporte à son extrémité amont (201 ; 301) une portion annulaire (210 ; 310) comportant une pluralité de fentes (211 ; 311) délimitant entre elles une pluralité de pattes de fixation élastiques (212 ; 312), chaque fente coopérant avec un bras du carter d'échappement, le carter d'échappement (100) comprenant en outre des portions de fixation (131 ; 132) auxquelles sont attachées les pattes de fixation élastiques (212 ; 312).

2. Ensemble d'arrière corps selon la revendication 1, **caractérisé en ce qu'**il comprend un cône d'échappement (200) en matériau composite fixé sur les bras (130) du carter d'échappement (100) à une position intermédiaire entre la virole interne (110) et la virole externe (120) dudit carter, lesdits bras comprenant chacun une portion de fixation (131) au niveau de ladite position intermédiaire à laquelle est attachée une patte de fixation élastique (212) de la portion annulaire (210) située à l'extrémité amont (201) du cône d'échappement (200).

3. Ensemble d'arrière corps selon la revendication 1 ou 2, **caractérisé en ce qu'**il comprend une tuyère d'échappement (300) en matériau composite fixée sur les bras (130) du carter d'échappement (100) à une position voisine de la virole externe (120) dudit carter, ladite virole externe (120) comprenant des portions de fixation (132) auxquelles sont attachées les pattes de fixation élastiques (312) de la portion annulaire (310) située à l'extrémité amont (310) de la tuyère d'échappement (300).

4. Ensemble d'arrière corps selon l'une quelconque des revendications 1 à 3, **caractérisé en ce que** chaque fente (211 ; 311) comporte une première partie (2110 ; 3110) s'étendant à partir de l'extrémité amont (210 ; 310) de chaque pièce axisymétrique (200 ; 300) et présentant des dimensions correspondant à la partie du bras (130) avec laquelle ladite fente coopère.

5. Ensemble d'arrière corps selon la revendication 4, **caractérisé en ce que** chaque fente (211 ; 311) comporte en outre une seconde partie (2111 ; 3111) s'étendant en aval de la première partie (2110 ; 3110).

6. Ensemble d'arrière corps selon l'une quelconque des revendications 1 à 5, **caractérisé en ce que** chaque pièce axisymétrique (200 ; 300) est réalisée en matériau composite comprenant un renfort fibreux en fibres réfractaires densifié par une matrice au moins partiellement céramique.

7. Ensemble d'arrière corps selon la revendication 6, **caractérisé en ce que** la matrice est une matrice céramique choisie parmi au moins : un oxyde, un nitrure, un carbure et un siliciure.

8. Ensemble d'arrière corps selon la revendication 6, **caractérisé en ce que** chaque pièce axisymétrique (200 ; 300) est réalisée en matériau composite comprenant un renfort fibreux en fibres de carbure de silicium densifié par une matrice en carbure de silicium comportant une ou plusieurs phases auto-cicatrisantes.

9. Moteur aéronautique comprenant un ensemble d'arrière-corps selon l'une quelconque des revendications 1 à 8.

10. Aéronef équipé d'au moins un moteur aéronautique selon la revendication 9.

## Patentansprüche

1. Heckteilanordnung (400) eines Luftfahrttriebwerks, umfassend ein Abgasgehäuse (100) aus einem metallischen Material, umfassend eine Vielzahl von Armen (130), die sich radial zwischen einem Innenring (110) und einem Außenring (120) radial erstreckt, wobei die Einheit ferner mindestens ein achssymmetrisches Teil (200; 300) aus einem Verbundstoff umfasst, das sich zwischen einem stromaufwärtigen Ende (201; 301), das am Abgasgehäuse (100) befestigt ist, und einen freien stromabwärtigen Ende (202; 302) erstreckt,
**dadurch gekennzeichnet, dass** das achssymmetrische Teil an seinem stromaufwärtigen Ende (201; 301) einen ringförmigen Abschnitt (210; 310) aufweist, umfassend eine Vielzahl von Schlitzen (211; 311), die zwischen sich eine Vielzahl von elastischen Befestigungslaschen (212; 312) begrenzen, wobei jeder Schlitz mit einem Arm des Abgasgehäuses zusammenwirkt, wobei das Abgasgehäuse (100) ferner Befestigungsabschnitte (131; 132) umfasst, an denen die elastischen Befestigungslaschen (212; 312) befestigt sind.

2. Heckteilanordnung nach Anspruch 1, **dadurch gekennzeichnet, dass** sie einen Abgaskegel (200) aus einem Verbundstoff umfasst, der an den Armen (130) des Abgasgehäuses (100) in einer Zwischenposition zwischen dem Innenring (110) und dem Außenring (120) des Gehäuses befestigt ist, wobei die Arme jeweils einen Befestigungsabschnitt (131) im Bereich der Zwischenposition umfassen, an dem eine elastische Befestigungslasche (212) des ringförmigen Abschnitts (210), der sich am stromaufwärtigen Ende (201) des Abgaskegels (200) befindet, befestigt ist.

3. Heckteilanordnung nach Anspruch 1 oder 2, **dadurch gekennzeichnet, dass** sie ein Abgasrohr (300) aus Verbundstoff umfasst, das an den Armen (130) des Abgasgehäuses (100) in einer Position nahe dem Außenring (120) des Gehäuses befestigt ist, wobei der Außenring (120) Befestigungsabschnitte (132) umfasst, an denen die elastischen Befestigungslaschen (312) des ringförmigen Abschnitts (310), der sich am stromaufwärtigen Ende (310) des Abgasrohrs (300) befindet, befestigt sind.

4. Heckteilanordnung nach einem der Ansprüche 1 bis 3, **dadurch gekennzeichnet, dass** jeder Schlitz (211; 311) einen ersten Teil (2110; 3110), der sich vom stromaufwärtigen Ende (210; 310) jedes achssymmetrischen Teils (200; 300) aus erstreckt und Dimensionen aufweist, die dem Teil des Arms (130) entsprechen, mit dem der Schlitz zusammenwirkt.

5. Heckteilanordnung nach Anspruch 4, **dadurch gekennzeichnet, dass** jeder Schlitz (211; 311) ferner einen zweiten Teil (2111; 311) umfasst, der sich stromabwärts zum ersten Teil (2110; 3110) erstreckt.

6. Heckteilanordnung nach einem der Ansprüche 1 bis 5, **dadurch gekennzeichnet, dass** das achssymmetrische Teil (200; 300) aus einem Verbundstoff hergestellt ist, umfassend eine Faserverstärkung aus feuerfesten Fasern, verdichtet durch eine zumindest teilweise keramische Matrix.

7. Heckteilanordnung nach Anspruch 6, **dadurch gekennzeichnet, dass** die Matrix eine Keramikmatrix ist, die ausgewählt ist unter mindestens: einem Oxid, einem Nitrid, einen Karbid und einem Silizid.

8. Heckteilanordnung nach Anspruch 6, **dadurch gekennzeichnet, dass** jedes achssymmetrische Teil (200; 300) aus Verbundstoff hergestellt ist, umfassend eine Faserverstärkung aus Siliziumkarbidfasern, verdichtet durch eine Matrix aus Siliziumkarbid, umfassend eine oder mehrere selbstheilende Phasen.

9. Luftfahrttriebwerk, umfassend eine Heckteilanordnung nach einem der Ansprüche 1 bis 8.

10. Luftfahrzeug, das mit mindestens einem Triebwerk nach Anspruch 9 ausgestattet ist.

## Claims

1. An aeroengine after-body assembly (400) comprising an exhaust casing (100) made of metal having a plurality of arms (130) extending radially between an inner shroud (110) and an outer shroud (120), said assembly further comprising at least one axisymmetric part (200; 300) made of composite material extending between an upstream end (201; 301) fastened to said exhaust casing (100) and a downstream end (202; 302) that is free,
the assembly being **characterized in that** said axisymmetric part has an annular portion (210; 310) at its upstream end (201; 301), which annular portion includes a plurality of slots (211; 311) defining between them a plurality of resilient fastener tabs (212; 312), each slot co-operating with an arm of the exhaust casing, the exhaust casing (100) further including fastener parts (131; 132) to which the resilient fastening tabs (212; 312) are attached.

2. An after-body assembly according to claim 1, **characterized in that** it includes an exhaust cone (200) made of composite material fastened on the arms (130) of the exhaust casing (100) at intermediate positions between the inner shroud (110) and the outer shroud (120) of said casing, each of said arms including a fastener part (131) at the level of said intermediate position, with a resilient fastener tab (212) of the annular portion (210) situated at the upstream end (201) of the exhaust cone (200) being attached thereto.

3. An after-body assembly according to claim 1 or claim 2, **characterized in that** it includes an exhaust nozzle (300) made of composite material fastened on the arms (130) of the exhaust casing (100) in positions close to the outer shroud (120) of said casing, said outer shroud (120) having fastener parts (132) attached to the resilient fastener tabs (312) of the annular portion (310) situated at the upstream end (301) of the exhaust nozzle (300) are attached.

4. An after-body assembly according to any one of claims 1 to 3, **characterized in that** each slot (211; 311) includes a first portion (2110; 3110) extending from the upstream end (201; 301) of each axisymmetric part (200; 300) and presenting dimensions that correspond to the portion of the arm (130) with which said slot cooperates.

5. An after-body assembly according to claim 4, **characterized in that** each slot (211; 311) further includes a second portion (2111; 3111) extending downstream from the first portion (2110; 3110).

6. An after-body assembly according to any one of claims 1 to 5, **characterized in that** each axisymmetric part (200; 300) is made of composite material comprising fiber reinforcement made of refractory fibers densified by a matrix that is at least partially ceramic.

7. An after-body assembly according to claim 6, **characterized in that** the matrix is a ceramic matrix selected from at least: an oxide; a nitride; a carbide; and a silicide.

8. An after-body assembly according to claim 6, **characterized in that** each axisymmetric part (200; 300) is made of a composite material comprising fiber reinforcement made of silicon carbide fibers densified by a silicon carbide matrix including one or more self-healing phases.

9. An aeroengine including an after-body assembly according to any one of claims 1 to 8.

10. An aircraft fitted with at least one aeroengine according to claim 9.
